Europäisches Patentamt

European Patent Office

Office européen des brevets

(11) Publication number: **0 389 731**
**A2**

(19)

## (12) EUROPEAN PATENT APPLICATION

(21) Application number: **89500132.9**

(51) Int. Cl.5: **G06K 7/08**

(22) Date of filing: **18.12.89**

(30) Priority: **31.03.89 ES 8901131**

(43) Date of publication of application:
**03.10.90 Bulletin 90/40**

(84) Designated Contracting States:
**AT BE CH DE FR GB GR IT LI LU NL SE**

(71) Applicant: **AMPER S.A.**
**Torrelaguna, 75**
**E-28027 Madrid(ES)**

(72) Inventor: **Moreno del Collado, Francisco**
**Torrelaguna, 75**
**E-28077 Madrid(ES)**
Inventor: **Prados Tomas, Jesus Maria**
**Torrelaguna, 75**
**E-28077 Madrid(ES)**

(74) Representative: **Carpintero Lopez, Francisco**
**HERRERO & ASOCIADOS, S.L. Alcalá, 21**
**E-28014 Madrid(ES)**

(54) Connection of a magnetic card reading module to a microcontroller.

(57) The connection of a magnetic card reading module to a microcontroller is intended for minimising the interface circuitry between a magnetic card reading device and a microcontroller, in addition to allowing writing of the control programs in a high level language.

The said connection is established such that the signals supplied by the reading device and indicating the presence of cards reach an interruption input of the microcontroller through an AND port, whereas the clock signals for data sampling are directly connected to respective internal hardware counters of the microcontroller. Finally, the lines carrying the reading data are introduced through two ports of the microcontroller.

EP 0 389 731 A2

# CONNECTION OF A MAGNETIC CARD READING MODULE TO A MICROCONTROLLER

## OBJECT OF THE INVENTION

The present invention, as expressed in the title of the specification, relates to the connection of a magnetic card reading module to a microcontroller, the object whereof is to minimise interface circuitry between the reader and the microcontroller, in addition to allowing writing of the control programs in a high level language.

## BACKGROUND OF THE INVENTION

Current solutions either include more circuitry, for example the use of a UART the clock input thereof is the RCL output of the reading device, such that the data is read autonomously or they are more inefficient as regards software, such as the connection of RCL clock outputs to the microcontroller input interruptions, the latter reading the respective data in a port.

## DESCRIPTION OF THE INVENTION

The connection of the magnetic band reading module to a microcontroller as described by the invention allows the connection of a manual magnetic band reading module of tracks 1 and 2, or tracks 2 and 3, in accordance with ISO norms 7810 to 7813, to a microcontroller, of, for example, the 8031 family.

For minimising the interface circuitry, a microcontroller has been chosen in place of a microprocessor, with the advantage that it avoids, amongst other components, the use of circuitry for directional decoding.

The fact that a microcontroller of the 8031 family has been chosen is due essentially to the existence of two internal hardware counters, the inputs whereof may be directly connected to the clock signals generated by the card reading device.

The reading process is effected during a routine interruption, execution whereof is provoked by the passage of the card. The programming language used is PLM 51, high level structured language which allows efficient programming of such microcontrollers.

## DESCRIPTION OF THE DRAWINGS

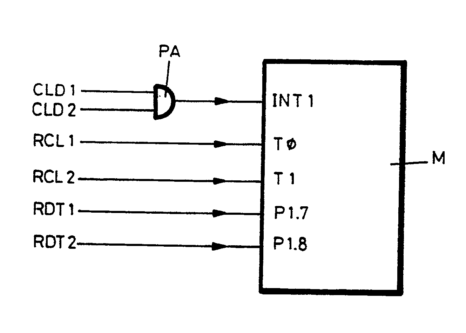

In order to complete the description being made and to assist a better understanding of the characteristics of the invention, a page of drawings is attached to the present specification, as an integral part thereof, where its sole figure shows a diagram of the connection of a magnetic card reading device to a microcontroller, specifically of the 8031 family.

## PREFERRED EMBODIMENT OF THE INVENTION

In the light of the figure, it can be observed that the diagram for connection of the card reading module to the microcontroller as proposed by the invention is comprised such that the signals detecting the presence of a card CLD 1 and CLD 2 reach the microcontroller through interruption line INT 1; the RCL 1 and RCL 2 signals are connected to internal hardware counters T0 and T1, whereas the signals to be sampled, RDT 1 and RDT 2, are connected to pins 7 and 8 of port 1 (P1) of microcontroller M.

When the magnetic card reading device detects the presence of a moving card, it generates a downward flank through CLD 1 and/or CLD 2, which creates an interruption request along line INT 1 of the microcontroller.

When the microcontroller accepts the said interruption, it programs pins 14 and 15 as input to internal hardware counters T0 and T1. As from this moment, each time it detects an increase of T0, it will read the data on pin 8, and each time it detects an increase of T1 it will read the data in pin 7, inputs of port 1 (P1) of microcontroller M.

The entire process is effected during the interruption routine and end thereof is produced by temporization, approximately 1 second after detection of the presence of the card.

The diagram of connection refers to a magnetic card reading device (tracks 1 and 2). When a card reading device for tracks 2 and 3 is connected, an analogous reading process takes place.

It is not considered necessary to extend the present description any further for a person skilled in the art to which it pertains to understand the scope of the invention and the advantages derived therefrom.

The materials, shape, size and arrangement of the elements may vary, provided such variation does not imply a modification of the essentiality of the invention.

The terms used in the description of the specification should be understood to havew a wide and non limiting meaning.

**Claims**

1.- CONNECTION OF A MAGNETIC CARD READING MODULE TO A MICROCONTROLLER, which, being designed to minimize the interface circuitry between a magnetic card reading module and a microcontroller at the same time as it allows the writing of control programs in a high level language, is essentially characterized in that the outputs for card presence (CLD 1 and CLD 2) of the magnetic card reading device are connected to the interruption input INT 1 of the microcontroller (M) through port AND (PA), whereas the outputs corresponding to the clock reading device (RCL 1 and RCL 2) and sampling signal outputs (RDT 1 and RDT 2) are directly connected to internal hardware counters of the microcontroller (M) and to pins 7 and 8 of port 1 (P1) respectively.

PA

CLD 1 ———
CLD 2 ———

INT 1

RCL 1 ——————————→ T ∅

RCL 2 ——————————→ T 1

M

RDT 1 ——————————→ P 1.7

RDT 2 ——————————→ P 1.8